# EUROPÄISCHE PATENTSCHRIFT

(11) **EP 0 980 485 B1**
(45) Veröffentlichungstag und Bekanntmachung des Hinweises auf die Patenterteilung: **22.06.2005**
(21) Anmeldenummer: 98932040.3
(22) Anmeldetag: 30.04.1998
(51) Int. Cl.: F16K 49/00

(54) **VERFAHREN UND VORRICHTUNG ZUM ERWÄRMEN EINER VENTILANORDNUNG**
METHOD AND DEVICE FOR HEATING A VALVE SYSTEM
PROCEDE ET DISPOSITIF DE CHAUFFE D'UN SYSTEME DE VANNE

(30) Priorität: 09.05.1997 DE 19719725
(43) Veröffentlichungstag der Anmeldung: 23.02.2000
(73) Patentinhaber: SIEMENS AKTIENGESELLSCHAFT, 80333 München (DE)
(72) Erfinder: LOGAR, Andreas, D-45527 Hattingen (DE); NEUMANN, Rainer, D-45478 Mülheim an der Ruhr (DE); GOBRECHT, Edwin, D-40885 Ratingen (DE)
(86) Internationale Anmeldenummer: PCT/DE1998/001202
(87) Internationale Veröffentlichungsnummer: WO 1998/051952

(56) Entgegenhaltungen:
- EP-A- 0 053 514
- DE-A- 1 426 850
- US-A- 3 200 833
- PATENT ABSTRACTS OF JAPAN vol. 009, no. 333 (M-443), 27. Dezember 1985 & JP 60 164603 A (TOSHIBA KK), 27. August 1985

## Beschreibung

Die Erfindung bezieht sich auf ein Verfahren zum Erwärmen einer Ventilanordnung einer Dampfturbine. Sie bezieht sich weiter auf eine Vorrichtung zur Durchführung des Verfahrens. Unter Ventilanordnung wird hier insbesondere eine Umleitventil- und/oder Mitteldruck-Ventilanordnung verstanden, die jeweils ein Schnellschlußventil mit nachgeschaltetem Stellventil umfaßt.

In der deutschen Auslegeschrift 1 426 850 ist eine Regeleinrichtung für eine Dampfturbinenanlage mit einer Hochdruckteilturbine und einer Mitteldruckteilturbine sowie einem zwischen den Teilturbinen angeordneten Zwischenüberhitzer beschrieben. Stromauf jeder Teilturbine ist eine Ventilanordnung umfassend jeweils ein Schnellschlußventil und ein Regelventil vorgesehen. Von dem Zwischenüberhitzer zweigt eine Umgehungsleitung zu einem Kondensator ab, die durch zwei Absperrventile verschlossen ist.

Die US-A-3200833 offenbart ein Verfahren zum Erwärmen eines Ventils. Dabei wird an ein Ventil Dampf geführt, wobei später in einer separaten Ableitung eine Kondensation des Dampfes erfolgt, so daß das Ventil durch den anströmenden Dampf erwärmt wird. Im Ventil selbst erfolgt keine Kondensation.

Der Erfindung liegt die Aufgabe zugrunde, ein besonders einfaches und zuverlässiges Verfahren zur Erwärmung einer Ventilanordnung einer Damfturbine anzugeben, insbesondere zur Warmhaltung einer Umleitventilanordnung und zum Anwärmen einer Mitteldruck-Ventilanordnung. Darüber hinaus soll eine zur Durchführung des Verfahrens geeignete Vorrichtung mit besonders geringem Leitungsaufwand angegeben werden.

Bezüglich des Verfahrens wird die Aufgabe erfindungsgemäß gelöst durch die Merkmale des Anspruchs 1. Dabei wird an die geschlossene Ventilanordnung geführter Dampf kondensiert und das Kondensat abgeführt.

Die Erfindung geht von der Erkenntnis aus, daß bei einer Umleitventilanordnung für Niederdruck- oder Mitteldruckdampf einer Dampfturbine mit einer Bypaß- oder Umleitung zum Kondensator der Dampfturbine die Bereitstellung einer Anwärmleitung einen erheblichen Materialaufwand verursacht und daher sehr kostenintensiv ist. Die Umleitung kann in diesem Fall von einer zur Dampfturbine geführten Frischdampfleitung zwischen einem Dampfsieb und einer Frischdampf- oder Mitteldruck-Ventilanordnung abzweigen, wobei die Umleitventilanordnung über die Anwärmleitung schnellschlußseitig bei geschlossenem Schnellschlußventil angewärmt wird. Dazu wäre die Anwärmleitung derart an die Umleitventilanordnung zu führen, daß sich aufgrund eines Druckgefälles entlang des Dampfsiebes eine. Dampfströmung mit über das Schnellschlußventil und über die Umleitung geschlossener Dampfzirkulation einstellt. Bei einer Anordnung mit im Schnellschlußventil der Mitteldruck-Ventilanordnung vorgesehenem Dampfsieb wäre ein für die Zirkulation des Anwärmdampfes erforderliches Druckgefälle sehr gering, so daß aufgrund des geringen Druckgefälles zur Erreichung des notwendigen Massenstromes für die Erwärmung der Umleitventilanordnung daher Leitungen mit großem Durchmesser erforderlich sind. Dies führt wiederum zu einem kostenintensiven Materialaufwand. Dies wird durch das erfindungsgemäße Anwärmen durch Kondensation vermieden, da keine gesonderten Leitungen erforderlich sind.

In einer bevorzugten Ausführungsform wird die Erwärmungstemperatur zweckmäßigerweise durch kontinuierliches Abführen des Kondensats konstant auf Sattdampftemperatur gehalten. Zur Warmhaltung der an den Kondensator der Dampfturbine geführten Umleitventilanordnung wird vorteilhafterweise derjenige Teilstrom des der Dampfturbine zugeführten Frischdampfes verwendet, der dieser Ventilanordnung bereits über die Umleitung schnellschlußseitig zugeführt ist.

Prinzipiell wird zur Anwärmung und Warmhaltung der Umleitventilanordnung im Gegensatz zu einer durch Druckdifferenz erzeugten Dampfzirkulaiton ein Kondensatoreffekt genutzt. Dieser tritt aufgrund des Vorhandenseins lediglich der Umleitung selbst an einem vor dem geschlossenen Schnellschlußventil der Umleitventilanordnung sich bildenden Sackloch auf. Durch die in der Umleitung nachrückende Dampfsäule entsteht eine Strömung, wobei der Dampf infolge eines Temperaturgefälles entlang der Ventilanordnung vor dem geschlossenen Schnellschlußventil kondensiert. Durch kontinuierliches Abführen des Kondensats auf der Zuströmseite der Ventilanordnung stellt sich bei gegebenem Druck die entsprechende Sattdampftemperatur ein.

Dieser Effekt wird vorteilhafterweise auch beim Anfahren der Dampfturbine genutzt, indem die der Dampfturbine vorgeschaltete Mitteldruck-Ventilanordnung mittels der Dampfturbine zugeführtem Frischdampf angewärmt wird. Auch hier wird das Kondensat abgeführt, das aufgrund der Temperaturdifferenz entlang der Ventilanordnung durch Abkühlen des mit Frischdampftemperatur gegen das geschlossene Schnellschlußventil der Ventilanordnung anströmenden Dampfes entsteht. Dabei stellt sich wiederum die dem jeweils herrschenden Frischdampfdruck entsprechende Sattdampftemperatur automatisch ein, solange das entstehende Kondensat kontinuierlich abgeführt wird.

Bezüglich der Vorrichtung wird die genannte Aufgabe erfindungsgemäß gelöst durch die Merkmale des Anspruchs 5. Wesentliches Vorrichtungsmerkmal ist dabei eine schräg verlaufende Anordnung der an die Ventilanordnung geführten Dampfleitung. Dabei weist die an die Ventilanordnung geführte Dampfleitung zweckmäßigerweise einen mit einem Gefälle oder mit einer Steigung versehenen Leitungsanschnitt auf, der dann den Einströmabschnitt der Ventilanordnung bildet.

Bei einem mit einem Gefälle versehenen Leitungsabschnitt ist im tiefsten Punkt dieses Abschnittes eine Entwässerungsöffnung zum Abführen des entstehenden Kondensats vorgesehen. Analog ist bei einem mit einer Steigung versehenen Leitungsabschnitt vorzugsweise vor dem einströmseitigen Ventilsitz oder Ventilteller des Schnellschlußventils eine entsprechende Entwässerungsdurchführung in der Ventilanordnung vorgesehen. Eine an die Entwässerungsöffnung bzw. an die Entwässerungsdurchführung angeschlossene Entwässerungsvorrichtung kann ein bei anfallendem Kondensat automatisch öffnendes Ventil oder ein sogenannter Kondensomat sein.

Die mit der Erfindung erzielten Vorteile bestehen insbesondere darin, daß durch Ausnutzung des Kondensatoreffekts direkt an einer geschlossenen Ventilanordnung eine zusätzliche Anwärmleitung und eine zusätzliche Leitungsverlängerung zur Erzeugung einer Druckdifferenz für eine natürliche Dampfzirkulation entfällt. Vielmehr können die vorhandenen Dampfleitungen, nämlich die vorhandene Umleitung einerseits und die Frischdampfleitung andererseits, verwendet werden. Lediglich ein direkt vor der jeweiligen Ventilanordnung vorgesehener Leitungsabschnitt der an die jeweilige Ventilanordnung geführten Dampfleitung ist mit einer Steigung oder mit einem Gefälle zu verlegen.

Wesentlicher Vorteil, insbesondere beim Warmhalten der Umleitventilanordnung, ist die im Vergleich zur Frischdampftemperatur geringe Sattdampftemperatur am Ventilteller oder Ventilsitz und das damit verbundene geringe Temperaturgefälle entlang der gesamten Ventilanordnung. Dadurch ist eine wesentlich verringerte Wärmebelastung mit einer entsprechenden Materialschonung erzielt. Dies wiederum erhöht die Lebensdauer der Ventilanordnung.

Nachfolgend werden Ausführungsbeispiele der Erfindung anhand einer Zeichnung näher erläutert. Darin zeigen:
- FIG 1: schematisch im Ausschnitt einen Wasser-Dampf-Kreislauf einer Dampfturbine mit einer Mitteldruck- und einer Umleit-Ventilanordnung, und
- FIG 2 u. 3: im Längsschnitt eine Ventilanordnung mit einem eine Steigung bzw. ein Gefälle aufweisenden Leitungsabschnitt.

Einander entsprechende Teile sind in allen Figuren mit den gleichen Bezugszeichen versehen.

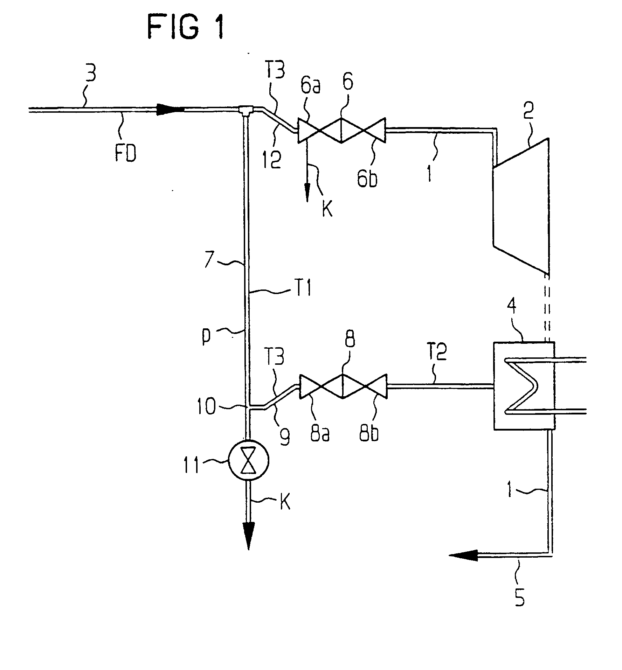

FIG 1 zeigt eine in einen Wasser-Dampf-Kreislauf 1 geschaltete Dampfturbine 2 einer Dampfturbinenanlage mit einer an die Dampfturbine 2 geführten Frischdampfleitung 3 und einem der Dampfturbine 2 nachgeschalteten Kondensator 4. Dieser ist ausgangsseitig über eine Kondensatleitung 5 z. B. mit einem (nicht dargestellten) Dampferzeuger zur Erzeugung von Frischdampf FD verbunden. Die Dampfturbine 2 kann aus einem Hochdruck-, einem Mitteldruck- und einem Niederdruckteil zusammengesetzt sein. In einer Kraftwerksanlage dient eine solche Dampfturbinenanlage zur Erzeugung elektrischer Energie, wozu die Dampfturbine 2 in an sich bekannter Weise einen (nicht dargestellten) Generator antreibt.

In die Frischdampfleitung 3 ist eine erste Ventilanordnung 6 mit einem Schnellschlußventil 6a und mit einem mit diesem verbundenen Stellventil 6b geschaltet. An die Frischdampfleitung 3 ist in Strömungsrichtung des Frischdampfes FD vor der Ventilanordnung 6 eine Umleitung 7 angeschlossen, die über eine zweite Ventilanordnung 8 mit wiederum einem Schnellschlußventil 8a und einem Stellventil 8b an den Kondensator 4 geführt ist. Die Umleitung 7 dient zur dampfseitigen Umführung der Dampfturbine 2, z. B. im Falle eines Schnellschlußes des bei Normalbetrieb geöffneten Schnellschlußventils 6a der Ventilanordnung 6. Im Normalbetrieb ist das Schnellschlußventil 8a der Ventilanordnung 8 geschlossen. Bei den Ventilanordnungen 6 und 8 handelt es sich um ein sogenanntes Mitteldruckventil bzw. um ein sogenanntes Umleitventil.

Bei Normalbetrieb erfolgt eine Warmhaltung der schnellschlußseitig geschlossenen Ventilanordnung 8, indem Frischdampf FD über die Umleitung 7 an das geschlossene Schnellschlußventil 8a geführt wird. Der mit einer Frischdampftemperatur T1 ≤ 700°C gegen das Schnellschlußventil 8a anströmende Frischdampf FD kühlt aufgrund der entlang der Ventilanordnung 8 entstehenden Temperaturdifferenz ΔT entsprechend ab, da auf der Abströmseite der Ventilanordnung 8 zwischen dem Stellventil 8b und dem Kondensator 4 eine Kondensattemperatur T2 von etwa 80°C herrscht, wobei ΔT = T1 - T2 ist. Am geschlossenen Schnellschlußventil 8a stellt sich bei gegebenem Dampfdruck p von typisch 20 bis 80 bar die entsprechende Sattdampftemperatur T3 von 212°C bis 295°C ein.

Dies ist dadurch bedingt, daß vor dem geschlossenen Schnellschlußventil 8a quasi ein Sackloch gebildet ist, an dem ein Kondensatoreffekt auftritt. Durch die nachrückende Dampfsäule entsteht eine Strömung infolge einer Kondensation des Frischdampfes FD an der Ventilanordnung 8. Um das dabei entstehende Kondensat K kontinuierlich abzuführen, ist zuströmseitig vor der Ventilanordnung 8 ein Leitungsabschnitt 9 der Umleitung 7 mit einem Gefälle verlegt. Die Strömung stellt sich aufgrund einer Druckdifferenz ein, die sich wiederum infolge der Kondensation des Frischdampfes FD und dem sich dadurch infolge einer Volumenreduzierung des Frischdampfes FD bildenden Unterdrucks einstellt. Die kontinuierliche Abführung des Kondensats K wird durch eine im tiefsten Punkt 10 des Leitungsabschnitts 9 an diesen angeschlossene Entwässerungsvorrichtung 11 gewährleistet. Die Entwässerungsvorrichtung 11 kann ein bei anfallendem Kondensat K automatisch öffnendes Ventil oder ein sogenannter Kondensomat sein.

Dieser Effekt wird auch beim Anfahren der Dampfturbine 2 zur Anwärmung der Mitteldruckventil-Anordnung 6 genutzt. Während dort bisher eine Dampfströmung durch das Schnellschlußventil 6a zum Kondensator 4 hin aufrecht erhalten wurde, wird auch hier nun die Anwärmung durch Kondensation von Frischdampf FD im geschlossenen Schnellschlußventil 6a bewirkt. Im Ausführungsbeispiel ist dazu auf der Zuströmseite des Schnellschlußventils 6a der Ventilanordnung 6 ein Leitungsabschnitt 12 wiederum schräg verlaufend angeordnet. Der Leitungsabschnitt 12 ist im Gegensatz zum vor der Ventilanordnung 8 vorgesehenen Leitungsabschnitt 9 mit einer Steigung verlegt, so daß der tiefste Punkt in diesem Fall im Schnellschlußventil 6a liegt. Das aufgrund der beim Anfahren der Dampfturbine 2 vorhandenen Temperaturdifferenz vor und hinter der Ventilanordnung 6 durch Kondensation des Frischdampfes FD entstehende Kondensat K wird vom geschlossenen Schnellschlußventil 6a in analoger Weise abgeführt. Auch hier stellt sich automatisch die dem jeweiligen Frischdampfdruck p entsprechende Sattdampftemperatur T3 ein.

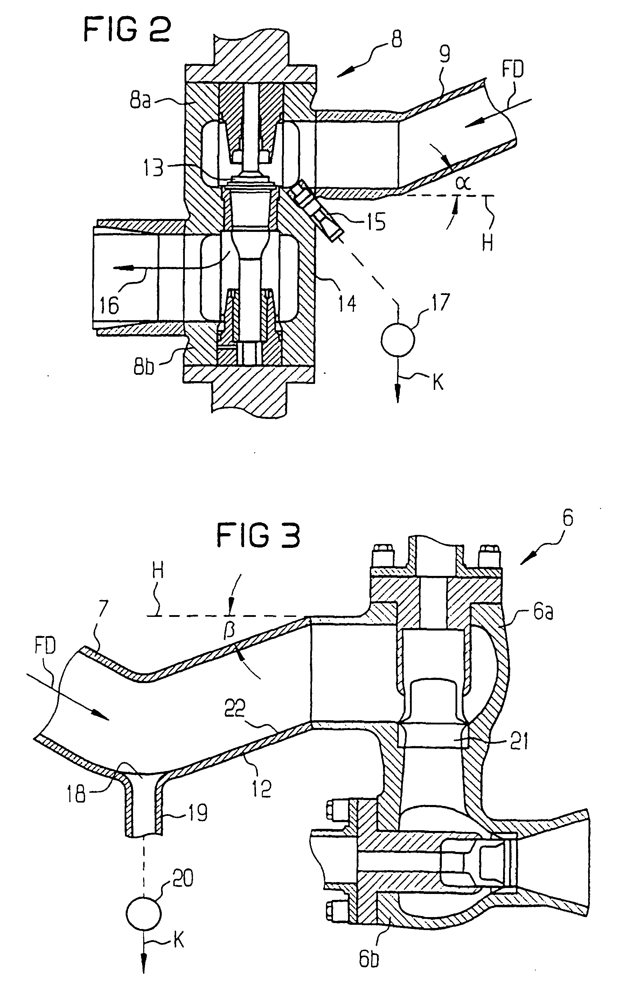

FIG 2 zeigt im Längsschnitt ein kombiniertes Umleit-Schnellschluß- und Stellventil 8, das im Ausführungsbeispiel ein sogenanntes Z-Ventil ist. Das Schnellschlußventil 8a ist oberhalb des Stellventils 8b angeordnet. Im Gegensatz zum Ausführungsbeispiel gemäß FIG 1 ist der hier den Einsrömabschnitt der Ventilanordnung 8 bildende Leitungsabschnitt 9 nicht mit einem Gefälle, sondern mit einer Steigung gegenüber der Horizontalen H verlegt. Dabei beträgt der Steigungswinkel α zwischen 0,5° und 5°, vorzugsweise 1°. In diesem Fall liegt der tiefste Punkt - in Strömungsrichtung des Frischdampfes FD gesehen - unmittelbar vor dem Ventilsitz 13 des geschlossenen Schnellschlußventils 8a. Im Ventilgehäuse 14 ist eine vor den Ventilsitz 13 geführte Entwässerungsdurchführung 15 vorgesehen, über die das Kondensat K zu einer Entwässerungsvorrichtung 15 abfließt. Im Falle eines betriebsbedingten Schnellschlusses des Schnellschlußventils 6a der Ventilanordnung 6 öffnet das Schnellschlußventil 8a, so daß der Frischdampf FD über dieses und das nachgeschaltete Stellventil 8b in Richtung des Pfeils 16 in den Kondensator 4 abströmt.

FIG 3 zeigt ein typisches kombiniertes Mitteldruck-Schnellschluß-Stellventil 6 mit stehendem Schnellschlußventil 6a und darunter liegend angeordnetem Stellventil 6b. Im Gegensatz zum Ausführungsbeispiel gemäß FIG 1 ist der hier den Einströmabschnitt der Ventilanordnung 6 bildende Leitungsabschnitt 12 nicht mit einer Steigung, sendern mit einem Gefälle verlegt. Der Gefällewinkel β zwischen der Horizontalen H und dem fallend angeordneten Leitungsabschnitt 12 beträgt ebenfalls zwischen 0,5° und 5°, vorzugsweise 1°.

Im tiefsten Punkt 18 ist an den Leitungsabschnitt 12 über einen Flanschabschnitt 19 wiederum eine Entwässerungsvorrichtung 20 angeschlossen. Der gegen einen Ventilsitz 21 des geschlossenen Schnellschlußventils 6a anströmende Frischdampf FD kondensiert, wobei das Kondensat K entlang des gegenüber der Horizontalen H mit Gefälle verlegten Leitungsabschnitts 12 bis zum tiefsten Punkt 18 an der Rohrinnenwand 22 des Leitungsabschnitts 12 herabläuft. Von dort fließt es über den Flanschabschnitt 19 zur Entwässerungsvorrichtung 20 ab.

## Patentansprüche

1. Verfahren, durch das ein Ventil einer Ventilanordnung (6, 8) einer Dampfturbine (2) angewärmt wird, indem an das geschlossene Ventil der Ventilanordnung (6, 8) Dampf (FD) geführt wird, der in dem Ventil kondensiert und das Kondensat (K) abgeführt wird.

2. Verfahren nach Anspruch 1, wobei die Erwärmungstemperatur durch kontinuierliches Abführen des Kondensats (K) auf Sattdampftemperatur (T3) gehalten wird.

3. Verfahren nach Anspruch 1 oder 2, wobei zur Warmhaltung einer an einen Kondensator (4) geführten Umleitventilanordnung (8) der dieser über eine Umleitung (7) zugeführte Frischdampf (FD) verwendet wird.

4. Verfahren nach Anspruch 1 oder 2, wobei zur Anwärmung einer an die Dampfturbine (2) geführten Mitteldruck-Ventilanordnung (6) der der Dampfturbine (2) zugeführte Frischdampf (FD) verwendet wird.

5. Vorrichtung zur Durchführung des Verfahrens nach einem der Ansprüche 1 bis 5, umfassend eine Ventilanordnung (6, 8) in einer Dampfturbine sowie eine an eine Ventilanordnung (6, 8) geführte Dampfleitung (3, 7), wobei die Dampfleitung (3, 7) einen schräg verlaufend angeordneten und in die Ventilanordnung (6, 8) einmündenden Leitungsabschnitt (9, 12) aufweist.

6. Vorrichtung nach Anspruch 5, wobei der Leitungsabschnitt (9, 12) ein Gefälle (β) mit einem tiefsten Punkt (10, 18) aufweist, in dem an die Dampfleitung (7) eine Entwässerungsvorrichtung (11, 20) angeschlossen ist.

7. Vorrichtung nach Anspruch 5, wobei der Leitungsabschnitt (9, 12) eine Steigung (α) mit einem tiefsten Punkt (13) aufweist, in dem an die Ventilanordnung (6, 8) eine bei anfallendem Kondensat (K) öffnende Entwässerungsvorrichtung (17) angeschlossen ist.

8. Vorrichtung nach Anspruch 7, wobei die Ventilanordnung (8) gehäuseseitig eine direkt vor deren Ventilsitz (13) geführte Entwässerungsdurchführung (15) aufweist.

## Claims

1. Method by which a valve of a valve arrangement (6, 8) of a steam turbine (2) is heated, in which steam (FD) is directed to the closed valve of the valve arrangement (6, 8), which steam condenses in the valve, and the condensate (K) is discharged.

2. Method according to Claim 1, the heating temperature being kept at saturated-steam temperature (T3) by continuous discharge of the condensate (K).

3. Method according to Claim 1 or 2, the live steam (FD) fed via a bypass (7) to a bypass-valve arrangement (8) directed to a condenser (4) being used in order to keep the bypass-valve arrangement (8) hot.

4. Method according to Claim 1 or 2, the live steam (FD) fed to the steam turbine (2) being used in order to heat up an intermediate-pressure valve arrangement (6) directed to the steam turbine (2).

5. Apparatus for carrying out the method according to one of Claims 1 to 5, comprising a valve arrangement (6, 8) in a steam turbine and a steam line (3, 7) run to a valve arrangement (6, 8), the steam line (3, 7) having a line section (9, 12) which is arranged to run at an angle and leads into the valve arrangement (6, 8).

6. Apparatus according to Claim 5, the line section (9, 12) having a falling slope (β) with a lowest point (10, 18) at which a draining device (11, 20) is attached to the steam line (7).

7. Apparatus according to Claim 5, the line section (9, 12) having a rising slope (α) with a lowest point (13) at which a draining device (17) which opens when condensate (K) collects is attached to the valve arrangement (6, 8).

8. Apparatus according to Claim 7, the valve arrangement (8) having on the casing side a draining leadthrough (15) run directly upstream of its valve seat (13).

## Revendications

1. Procédé par lequel une vanne d'un système (6, 8) de vanne d'une turbine (2) à vapeur peut être réchauffée en faisant passer sur la vanne fermée du système (6, 8) de vanne de la vapeur (FD) qui se condense dans la vanne et en évacuant le condensat (K).

2. Procédé suivant la revendication 1, dans lequel on maintient la température de réchauffement en évacuant en continu le condensat (K) à la température (T3) de la vapeur saturée.

3. Procédé suivant la revendication 1 ou 2, dans lequel, pour maintenir chaud un système (8) de vanne de dérivation menant à un condenseur (4), on utilise la vapeur (FD) fraîche qui lui est apportée par une dérivation (7).

4. Procédé suivant la revendication 1 ou 2, dans lequel, pour réchauffer un système (6) de vanne moyenne pression menant à la turbine (2) à vapeur, on utilise la vapeur (FD) fraîche qui est apportée à la turbine (2) à vapeur.

5. Dispositif pour la mise en oeuvre du procédé suivant l'une des revendications 1 à 5, comprenant un système (6, 8) de vanne dans une turbine à vapeur ainsi qu'un conduit (3, 7) pour de la vapeur menant à un système (6, 8) de vanne, le conduit (3, 7) pour la vapeur ayant un tronçon (9, 12) de conduit s'étendant de manière inclinée et débouchant dans le système (6, 8) de vanne.

6. Dispositif suivant la revendication 5, dans lequel le tronçon (9, 12) de conduit a une inclinaison descendante (β) ayant un point (10, 18) le plus bas où un dispositif (11, 20) de déshydratation est raccordé au conduit (7) pour de la vapeur.

7. Dispositif suivant la revendication 5, dans lequel le conduit (9, 12) a une pente ascendante (α) ayant un point (13) le plus bas où un dispositif (17) de déshydratation s'ouvrant lorsqu'il se produit du condensat (K) est raccordé au système (6, 8) de vanne.

8. Dispositif suivant la revendication 7, dans lequel le système (8) de vanne a, du côté de l'enveloppe, une traversée (15) de déshydratation passant directement devant le siège (13) de vanne.
